# EUROPEAN PATENT APPLICATION

(11) **EP 2 784 582 A1**
(43) Date of publication of application: **01.10.2014**
(21) Application number: 14160616.0
(22) Date of filing: 19.03.2014
(51) Int. Cl.: G03B 21/20, G02B 27/01, H04N 9/31

(54) **Projector device, head-up display device, and projector device control method**

(30) Priority: 29.03.2013 JP 2013072101
(71) Applicant: Funai Electric Co., Ltd., Daito-shi, Osaka 574-0013 (JP)
(72) Inventor: Arase, Hiroyuki, Osaka 574-0013 (JP)
(74) Representative: Vigand, Philippe

(57) **Abstract**

A projector device includes: a plurality of laser light sources (103 through 105) each of which output light of a different color component; a control unit that controls the intensity of the light output by each of the laser light sources (103 through 105); a display control unit (110) that projects an image on a combiner (60) by guiding the light output by each of the laser light sources (103 through 105) to the combiner (60); and a prediction unit that predicts which laser light source among the laser light sources (103 through 105) has the shortest remaining life, wherein the control unit reduces the intensity of the light output by the laser light source predicted to have the shortest remaining life to below a predetermined normal intensity.

## Description

### Field

The present invention relates to projector devices, and in particular to a projector device used in a head-up display (HUD) device or the like.

### Background

A projector device, for example, includes a laser light source that outputs red component light (R), a laser light source that outputs green component light (G), and a laser light source that outputs blue component light (B), and projects a color image on a projection screen by guiding the light output by these laser light sources to the projection screen. As such, when any one of the laser light sources becomes unusable, the desired color image cannot be projected on the projection screen and the operating life of the projector device is determined to be expired. When the operating life of the projector device expires, the plurality of the laser light sources need to be exchanged as a unit. In other words, the laser light source having the shortest operating life is the bottleneck that determines the operating life of the projector device.

A conventional projector device has been proposed which, when a laser light source becomes unusable due to deterioration or the luminous efficacy thereof decreases, interrupts operation of the laser light source or adjusts color tone by reducing the output power of the laser light source, in order to continue displaying images (for example, patent literature (PTL) 1).

### Citation List

### Patent Literature

[PTL 1] WO 2012/104967

### Summary

### Technical Problem

However, according to the conventional projector device, the color tone is not adjusted until the laser light source is already unusable or the luminous efficacy thereof has already decreased. As such, even if the color tone is adjusted, the operating life expectancy of the projector device cannot be increased since the operating life of the projector device has already expired or is close to expiring.

The present invention has been conceived to solve the above-described problem and aims to provide a projector device capable of efficiently increasing the operating life expectancy thereof.

### Solution to Problem

In order to achieve the above goal, the projector device according to an aspect of the present invention includes: a plurality of light source units each configured to output light of a different color component; a control unit configured to control an intensity of the light output by each of the light source units; a projection unit configured to project an image on a projection screen by guiding the light output by each of the light source units to the projection screen; and a prediction unit configured to predict which light source unit among the light source units has a shortest remaining life, wherein the control unit is configured to reduce the intensity of the light output by the light source unit predicted to have the shortest remaining life to below a predetermined normal intensity.

It is possible to predict the life expectancy of a light source unit before it becomes unusable, and even before the luminous efficacy thereof decreases. With this configuration, it is possible to restrict the intensity of light output by the light source unit predicted to have the shortest remaining life from an early stage. As such, the operating life expectancy of the projector device can be efficiently increased.

For example, the control unit may be configured to reduce the intensity of the light output by the light source unit predicted to have the shortest remaining life to zero.

Moreover, the control unit may be configured to, while the projection unit is projecting a setup image for configuring the projector device on the projection screen, reduce the intensity of the light output by the light source unit predicted to have the shortest remaining life to below the intensity of the light output by other ones of the light source units.

Even if the setup image is slightly difficult to see, this does not hinder the user. As such, by restricting the intensity of the light output by the light source unit predicted to have the shortest remaining life while a setup image is being projected, it is possible to avoid restricting the intensity of the light output by the light source unit predicted to have the shortest remaining life while an informative image is being projected. Thus, the operating life expectancy of the projector device can be efficiently increased without decreasing the visibility of the informative image.

Moreover, the projector device may further include: a color tone display unit configured to present to a user a plurality of color tones at each of which the light source unit predicted to have the shortest remaining life outputs light of less intensity than the light output by the other ones of the light source units, and prompt the user to select one of the color tones; and a storage unit configured to store the color tone selected by the user, wherein the control unit may be configured to, while the projection unit is projecting the setup image on the projection screen, control the intensity of the light output by each of the light source units to achieve the color tone stored in the storage unit.

This makes it possible for the setup image to be projected on the projection screen with a color tone that is easy to see for the user while reducing the intensity of the light source unit predicted to have the shortest remaining life.

Moreover, the projector device may further include an input unit configured to receive a user input for allowing a change in color tone of an informative image to be projected on the projection screen, wherein when the input unit receives the user input for allowing a change in color tone of the informative image, the control unit may be configured to, while the projection unit is projecting the informative image on the projection screen, reduce the intensity of the light output by the light source unit predicted to have the shortest remaining life to below an intensity resulting in an original color tone of the informative image.

With this, as long as the user allows for the color tone to be changed, it is possible to restrict the intensity of the light output from the light source unit predicted to have the shortest remaining life even when an informative image is being projected. As such, the operating life expectancy of the projector device can be efficiently increased.

Moreover, the projector device may be installed in a vehicle, and the control unit may be configured to, while the vehicle is stopped and the projection unit is projecting an informative image that provides assistance in driving the vehicle, reduce the intensity of the light output by the light source unit predicted to have the shortest remaining life to below an intensity resulting in an original color tone of the informative image.

While the automobile is in motion, it is necessary to make the informative images easy to see since the user is concentrating on driving. However, when the automobile is stopped, there is no problem in making the informative images slightly more difficult to see since the user is not mentally occupied with driving. As such, the operating life expectancy of the projector device can be efficiently increased while maintaining a safe environment while driving by restricting the intensity of the light output by the light source unit predicted to have the shortest remaining life while the automobile is stopped.

Moreover, the prediction unit may further be configured to predict which light source unit among the light source units has a longest remaining life, and the control unit may be configured to, while the projection unit is projecting the setup image on the projection screen, increase the intensity of the light output by the light source unit predicted to have the longest remaining life to above the predetermined normal intensity.

With this, the light source unit predicted to have the longest remaining life is preferentially used. The light source unit predicted to have the shortest remaining life, not the light source unit predicted to have the longest remaining life affects the operating life of the projector device. As such, by preferentially using the light source unit predicted to have the longest remaining life, it is possible to efficiently increase the operating life expectancy of the projector device while maintaining a balanced life expectancy for a plurality of light source units.

It should be noted that the present invention can not only be implemented as a projector device including characterizing processing units such as those described here, but as a projector device control method in which the processes performed by the characterizing processing units included in the projector device are implemented as steps. Moreover, the present invention can be implemented as a computer program for making a computer perform as the characterizing processing units included in the projector device, or as a computer program that causes a computer to execute the characterizing steps included in the projector device control method. It goes without saying that the computer program can be circulated on a non-transitory computer-readable storage recording medium such as a compact disc-read only memory (CD-ROM) or over a communications network such as the Internet.

### Advantageous Effects

According the present invention, it is possible to provide a projector device capable of efficiently increasing the operating life expectancy thereof.

### Brief Description of Drawings

[FIG. 1] FIG. 1 is an example of how the HUD device according to Embodiment 1 is installed.
[FIG. 2] FIG. 2 illustrates an example of what the user sees when looking through the windshield of the automobile.
[FIG. 3] FIG. 3 is a block diagram illustrating the HUD device hardware configuration.
[FIG. 4] FIG. 4 is a block diagram illustrating, as a functional configuration, processes executed by a main CPU when a computer program is executed by the main CPU.
[FIG. 5] FIG. 5 is an example of a setup image for configuring color tone, brightness, contrast, and resolution.
[FIG. 6] FIG. 6 is a flow chart of processes performed by the projector device.
[FIG. 7] FIG. 7 is an example of a table illustrating the relationship between the light source unit predicted to have the shortest remaining life, and color tone and brightness.
[FIG. 8] FIG. 8 illustrates an example of an image used for brightness adjustment.
[FIG. 9] FIG. 9 is a flow chart detailing the color tone selection process (S5 in FIG. 6).
[FIG. 10] FIG. 10 is an example of a first color tone selection image.
[FIG. 11] FIG. 11 is an example of a second color tone selection image.

### Description of Embodiments

Hereinafter, certain exemplary embodiments are described in greater detail with reference to the accompanying drawings. It should be noted that the exemplary embodiments described below show a specific example of the present invention. The numerical values, shapes, materials, structural elements, the arrangement and connection of the structural elements, steps, the processing order of the steps etc. shown in the following exemplary embodiments are mere examples, and therefore do not limit the present invention. Among the structural elements in the following exemplary embodiments, structural elements not recited in any one of the independent claims are described as arbitrary structural elements.

### Embodiment 1

Hereinafter, a head-up display (hereinafter simply referred to as HUD) device will be described as one example of the projector device according to the present invention. A HUD device is a system which projects an image on the windshield of an automobile such that a virtual image appears in front of the windshield (i.e. outside the automobile), in the field of view of the user (driver). In Embodiment 1, the description will focus on the processes for increasing the operating life expectancy of the HUD device.

### (Overall Configuration)

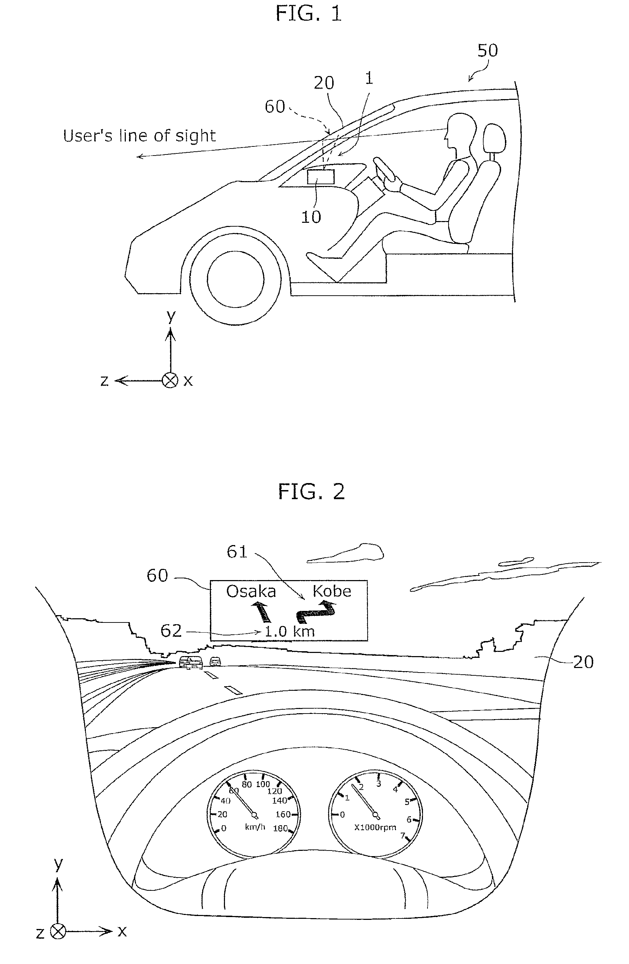

FIG. 1 is an example of how the HUD device according to Embodiment 1 of the present invention is installed. As FIG. 1 illustrates, the HUD device 1 includes a projector device 10 and a combiner 60 (which includes the transparent display plate).

The projector device 10 is installed in a transport vehicle, such as the automobile 50. For example, the projector device 10 is installed on the dashboard of the automobile 50. The combiner 60 is a projection screen installed on a portion of the windshield 20 of the automobile 50. The projector device 10 projects an image on the combiner 60 by shining light on the combiner 60. Since the combiner 60 is, for example, a polarizing element, an element that selectively passes certain wavelengths, or a one-way mirror, the image projected by the projector device 10 is superimposed on the scenery outside of the automobile. It should be noted that there are instances when the windshield 20 itself possesses the functions of the combiner 60.

FIG. 2 illustrates an example of what the user sees when looking through the windshield 20 of the automobile. As described above, the combiner 60 is installed on the windshield 20. An image projected by the projector device 10 is displayed on the combiner 60. As is illustrated in FIG. 2, the projector device 10 includes the function of displaying, for example, navigation information (such as the route to a destination) or automobile information (such as gas mileage) on the combiner 60. For example, the projector device 10 displays, on the combiner 60, an image showing route information 61 (Osaka, Kobe, and the arrows pointing the way to Osaka or Kobe) to a destination and distance information 62 (1.0 km) on distance to a destination (this kind of image is one example of an "informative image"). As is illustrated in FIG. 2, since the image projected by the projector device 10 is displayed among the scenery to the front of the automobile, the user driving the automobile 50 can view information helpful to driving without changing his or her line of sight.

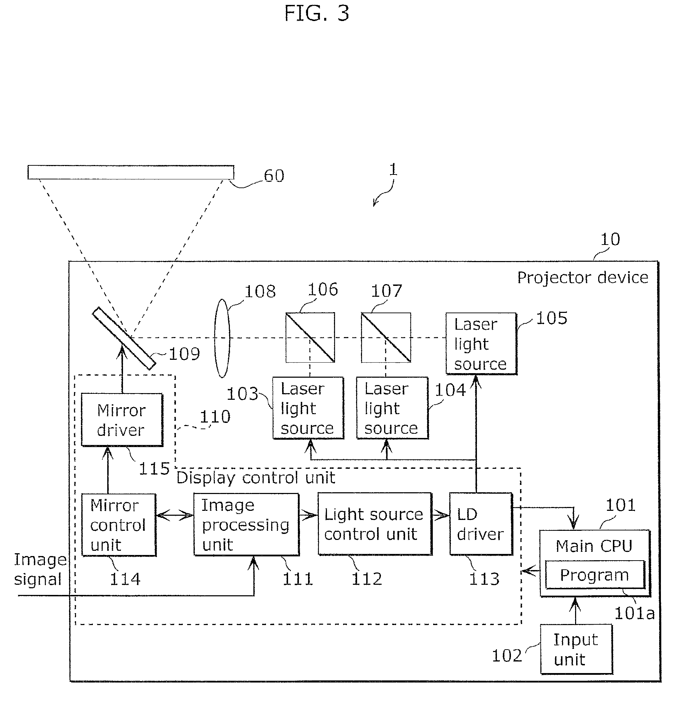

FIG. 3 is a block diagram illustrating the HUD device 1 hardware configuration.

The projector device 10 includes a main CPU 101, an input unit 102, laser light sources 103 through 105 (the plurality of light source units), a beam splitter 106, a beam splitter 107, a lens 108, a MEMS mirror 109, and a display control unit 110.

The main CPU 101 controls each component in the projector device 10. For example, the main CPU 101 controls the intensity of the laser light sources 103 through 105 to increase the operating life expectancy of the projector device 10. The intensity control processes performed by the main CPU 101 will be described later.

The input unit 102 receives inputs from the user, such as inputs for turning on the HUD device 1 (the projector device 10), changing the projection angle of the image, and changing the color tone or brightness of the image. The input unit 102 may be, for example, a hardware button or a software button, and may be a configured of a remote control and receiver which receives radio waves transmitted from the remote control.

The laser light source 103 is a laser diode that emits blue laser light on the MEMS mirror 109 through the beam splitter 106 and the lens 108.

The laser light source 104 and the laser light source 105 are laser diodes that emit a green laser light and a red laser light, respectively, on the MEMS mirror 109 through the beam splitter 107, the beam splitter 106, and the lens 108.

The laser light sources 103 through 105 greatly influence the operating life of the projector device 10. In other words, at the point in time any given one of the laser light sources becomes unusable, the projector device 10 can no longer project a full color image on the combiner 60. For this reason, when this occurs, the operating life of the projector device 10 is deemed to be expired.

As is illustrated in FIG. 2, the MEMS mirror 109 is driven and scans the laser light in two axes: horizontal (X axis direction) and vertical (Y axis direction). The MEMS mirror 109 is also capable of horizontal high-speed scanning by resonant driving and vertical low-speed scanning by direct current driving. Driving control of the MEMS mirror 109 is performed by a display control unit 110, which will be described next.

The display control unit 110 includes an image processing unit 111, a light source control unit 112, a laser diode (LD) driver 113, a mirror control unit 114, and a mirror driver 115.

The image processing unit 111 performs controlling for projection of the image on the combiner 60 based on an image signal input from an external source. More specifically, based on the image signal, the image processing unit 111 controls the driving of the MEMS mirror 109 via the mirror control unit 114 and controls the emission of the laser light from the laser light sources 103 through 105 via the light source control unit 112.

Based on the control by the image processing unit 111, the light source control unit 112 controls the LD driver 113 and emission of laser light from the laser light sources 103 through 105. More specifically, the light source control unit 112 performs controlling for causing the laser light sources 103 through 105 to emit laser light of color corresponding to each pixel of the image in synchronization with the scanning of the image by the MEMS mirror 109.

The LD driver 113 adjusts the intensity of the laser light sources 103 through 105 by supplying driving current to the laser light sources 103 through 105.

Based on the control by the image processing unit 111, the mirror control unit 114 controls the mirror driver 115 and controls the driving of the MEMS mirror 109. In other words, the mirror control unit 114 scans the combiner 60 with the laser light shining from the laser light sources 103 through 105 by controlling the tilt of the MEMS mirror 109. With this, the mirror control unit 114 projects the image on the combiner 60. In other words, an image projected on the combiner 60 that shows, for example, the route information 61 and the distance information 62, is generated by the image-generating laser light sources 103 through 105.

The mirror driver 115 changes the tilt of the MEMS mirror 109 by supplying a drive signal to the MEMS mirror 109.

### (Main CPU Configuration)

Next, processes performed by the main CPU 101 that are characteristic to Embodiment 1 will be described. As is illustrated in FIG. 3, the main CPU 101 operates according to a program 101a.

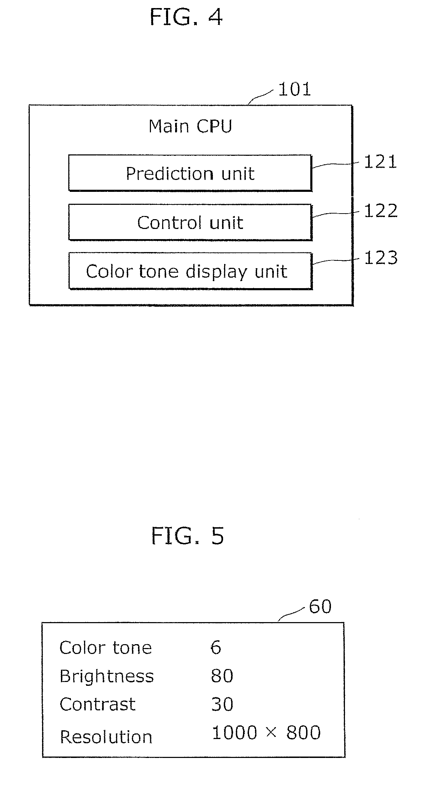

FIG. 4 is a block diagram illustrating, as a functional configuration, processes executed by the main CPU 101 when the program 101a is executed by the main CPU 101. In other words, when the program 101a is executed by the main CPU 101, the main CPU 101 includes, as processing units realized in a functional manner, a prediction unit 121, a control unit 122, and a color tone display unit 123.

The prediction unit 121 predicts which of the laser light sources 103 through 105 has the shortest remaining life. The method of predicting which laser light source has the shortest remaining life is not limited to a particular method. For example, in the case that the average service life of the laser light sources 103 through 105 is known in advance, the prediction unit 121 may predict the remaining life by subtracting the cumulative use time of the laser light source from the known service life, for each laser light source. For example, when the service life of the laser light source 103 is 10,000 hours and the accumulated use time of the laser light source 103 is 7,000 hours, the prediction unit 121 predicts that the remaining lifespan of the laser light source 103 is 3,000 hours. It should be noted that since information on whether the laser light source 103 is being used or not is obtainable from the LD driver 113, the prediction unit 121 can calculate the accumulated use time of each laser light source based on that information.

The control unit 122 controls the intensity of the laser light output from the laser light sources 103 through 105. In other words, via the light source control unit 112, the control unit 122 adjusts the color tone and/or the brightness of the image displayed on the combiner 60 by controlling the intensity of the laser light output from the laser light sources 103 through 105. More specifically, the control unit 122 reduces the intensity of the light output by the light source unit predicted to have the shortest remaining life by the prediction unit 121 to below a predetermined normal intensity. Preferably, the control unit 122 reduces the intensity of the light output by the light source unit predicted to have the shortest remaining life to zero. It should be noted that the prediction unit 121 may restrict the intensity of the light source unit predicted to have the shortest remaining life while a setup image for configuring the projector device 10 is being projected on the combiner 60. In other words, the prediction unit 121 may restrict the intensity of the light source unit predicted to have the shortest remaining life while a setup image for adjusting color tone, brightness, contrast, and resolution, such as the image illustrated in FIG. 5, is being projected on the combiner 60.

The color tone display unit 123 presents to the user a plurality of color tones at each of which the light source unit predicted to have the shortest remaining life outputs light of less intensity than the light output by other ones of the light source units, and prompts the user to select one of the color tones. The control unit 122 controls the intensity of the laser light output from the laser light sources 103 through 105 to achieve the selected the color tone. With this, the intensity of the light source unit predicted to have the shortest remaining life is restricted.

### (Processing Performed by the Projector Device 10)

Hereinafter, the processing performed by the projector device 10 will be described in detail.

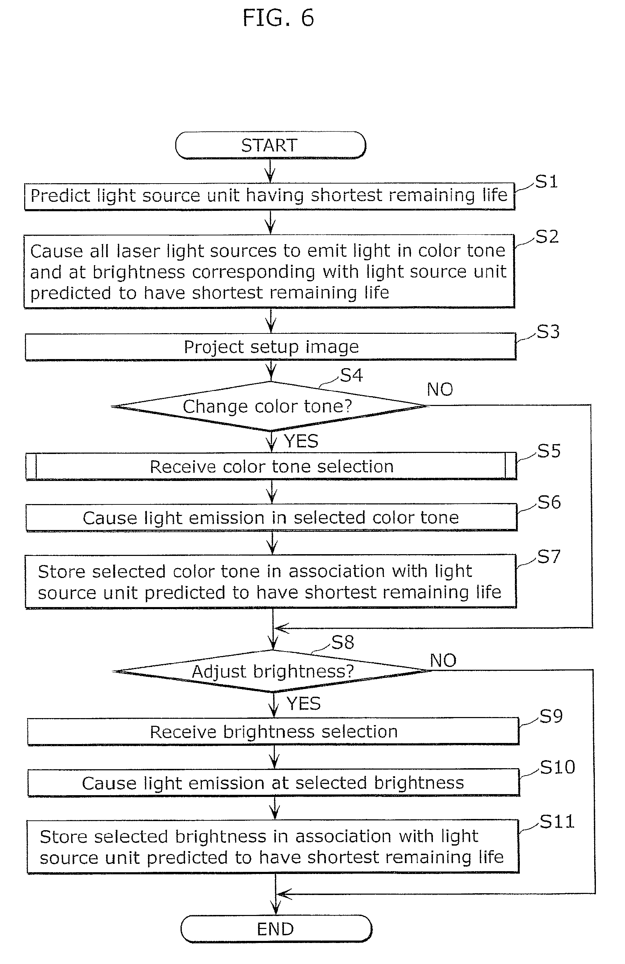

FIG. 6 is a flow chart of processes performed by the projector device 10. The processes in FIG. 6 are performed when a user makes an input for projecting the setup image on the combiner 60 using the input unit 102.

When the input unit 102 receives an input for projecting the setup image, the prediction unit 121 predicts the remaining lifespan of each of the laser light sources 103 through 105, and predicts which light source unit has the shortest remaining life (S1). In the following description, the laser light source 105 which outputs red laser light will be described as the light source unit predicted to have the shortest remaining life.

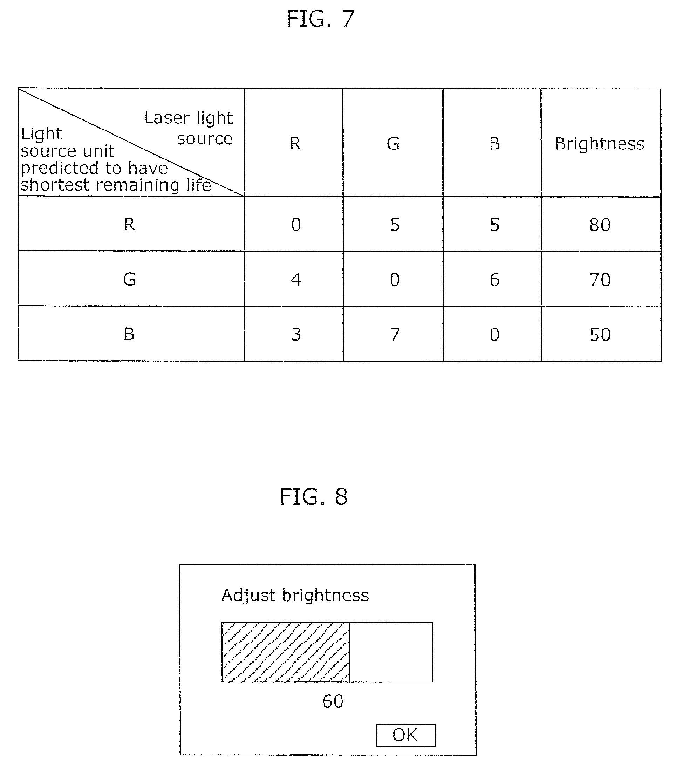

The control unit 122 causes all of the laser light sources to emit light in the color tone and at brightness that corresponds with the light source unit predicted to have the shortest remaining life (S2). In other words, the control unit 122 is a unit which stores a table showing the relationship between the light source unit predicted to have the shortest remaining life and color tone and brightness, like the one illustrated in FIG. 7. For example, when the light source unit predicted to have the shortest remaining life is the laser light source 105 that outputs red laser light, the control unit 122 causes the laser light sources 103 through 105 to emit light at a red (R), green (G), and blue (B) intensity ratio of 0:5:5. Moreover, the control unit 122 causes the laser light sources 103 through 105 to emit light that results in the image having a brightness of 80 out of 101 increments (level 0 to 100). With this, the above ratio is maintained.

The display control unit 110 projects the setup image on the combiner 60 (S3). This causes the characters in setup image, such as the one illustrated in FIG. 5, to have a color tone (R:G:B) of 0:5:5 and a brightness of 80.

When the user makes an input for changing color tone in the setup image (YES in S4), the main CPU 101 prompts the user to select a color tone (S5). Details regarding the color tone selection process (S5) will be described later.

The control unit 122 causes the laser light sources 103 through 105 to emit light that results in the selected the color tone (S6). This changes the color tone of the setup image.

Moreover, the control unit 122 stores the selected color tone as a color tone associated with the light source unit predicted to have the shortest remaining life (here, the laser light source 105) (S7). For example, if the color tone (R:G:B) selected by the user is 1:5:5, the control unit 122 writes that value in the table shown in FIG. 7 as a color tone to be used when the light source unit predicted to have the shortest remaining life is the laser light source 105. Thereafter, the setup image is projected with the color tone selected by the user.

When the user makes an input for adjusting the brightness of the setup image (YES in S8), the main CPU 101 instructs the display control unit 110 with projection instructions for the image prompting the user to select a brightness. In response to the projection instructions, the display control unit 110 projects a brightness selection image such as the one shown in FIG. 8 on the combiner 60. The user then selects a brightness by making an input to the input unit 102 (S9).

The control unit 122 causes the laser light sources 103 through 105 to emit light at the selected the brightness (S10). This changes the brightness of the setup image.

Moreover, the control unit 122 stores the selected brightness as a brightness associated with the light source unit predicted to have the shortest remaining life (here, the laser light source 105) (S11). For example, if the brightness selected by the user is 60, the control unit 122 writes that value in the table shown in FIG. 7 as a brightness to be used when the light source unit predicted to have the shortest remaining life is the laser light source 105. Thereafter, the setup image is projected with the brightness selected by the user.

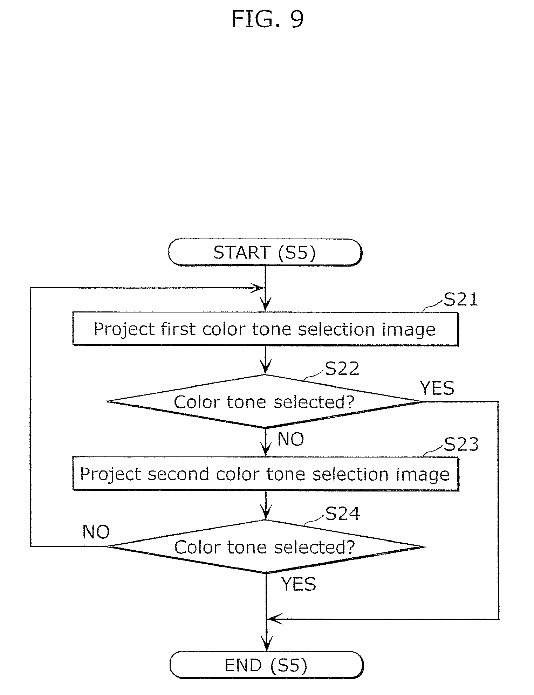

Next, details regarding the color tone selection process (S5 in FIG. 6) will be described. FIG. 9 is a flow chart detailing the color tone selection process (S5 in FIG. 6). Here, the laser light source 105 which outputs red laser light will be described as the light source unit predicted to have the shortest remaining life. As the same processes can be used to prompt the user to select a color tone when the light source unit predicted to have the shortest remaining life is the laser light source 103 or the laser light source 104, detailed descriptions in these cases are not repeated.

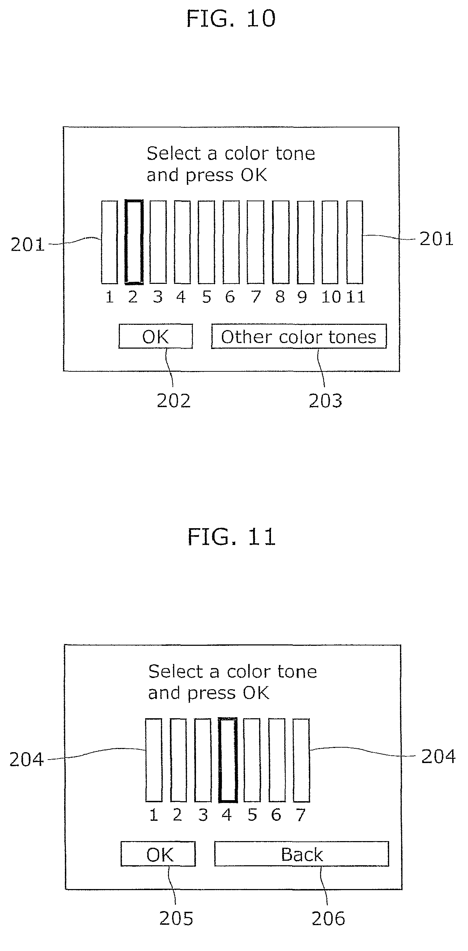

The color tone display unit 123 transmits instructions to the display control unit 110 and causes a first color tone selection image, which is an image used to prompt the user to select a color tone, to be displayed on the combiner 60 (S21). FIG. 10 is an example of a first color tone selection image. In the first color tone selection image, eleven bars 201 corresponding to eleven color tones from color tone 1 to color tone 11 are displayed in the color tones they correspond with. The R:G:B ratios of color tone 1, color tone 2, color tone 3, ..., color tone 11 are defined as (0:0:10), (0:1:9), (0:2:8), ..., (0:10:0), respectively. In other words, the proportion of R is always 0, and the G:B ratio is adjusted. The user, for example, can select a color tone corresponding to the bar 201 where the cursor is by moving the cursor over one of the bars 201 and pressing the OK button 202. If the user does not wish to choose any of the eleven color tones, the user may select a different color tone by pressing the button 203.

When the user selects a color tone by pressing the OK button 202 (YES in S22), the color tone selection process (S5 in FIG. 6) ends.

When the user does not select a color tone and presses the button 203 (NO in S22), the color tone display unit 123 transmits instructions to the display control unit 110 and causes a second color tone selection image, which is an image used to prompt the user to select a color tone, to be displayed on the combiner 60 (S23). FIG. 11 is an example of the second color tone selection image. In the second color tone selection image, seven bars 204 corresponding to seven color tones from color tone 1 to color tone 7 are displayed in the color tones they correspond with. The R: G: B ratios of color tone 1, color tone 2, color tone 3, ..., color tone 7 are defined as (1:2:8), (1:3:7), (1:4:6), ..., (1:8:2), respectively. In other words, the proportion of R is always 1, and the G:B ratio is adjusted. Additionally, the proportion of R is set less than the proportion of G and the proportion of B. The user, for example, can select a color tone corresponding to the bar 204 where the cursor is by moving the cursor over one of the bars 204 and pressing the OK button 205. If the user does not wish to choose any of the seven color tones, the user may return to the first color tone selection image by pressing the button 206.

When the user selects a color tone by pressing the OK button 205 (YES in S24), the color tone selection process (S5 in FIG. 6) ends.

When the user does not select a color tone and presses the button 206 (NO in S24), the processing is repeated from S21.

### (Advantageous Effect)

As described above, according to Embodiment 1 of the present invention, it is possible to restrict the intensity of light output by the light source unit predicted to have the shortest remaining life from an early stage, before the laser light source becomes unusable or before the luminous efficacy thereof decreases. As such, the operating life expectancy of the projector device can be efficiently increased.

Moreover, by restricting the intensity of the light output by the light source unit predicted to have the shortest remaining life while a setup image is being projected, it is possible to avoid restricting the intensity of the light output by the light source unit predicted to have the shortest remaining life while the informative image is being projected. As such, the operating life expectancy of the projector device can be efficiently increased without decreasing the visibility of the informative image. Since the visibility of the informative image is not affected, a safe environment while driving the automobile can be maintained.

Additionally, since the user can select the color tone of a setup image, it is possible for the setup image to be projected on the combiner with a color tone that is easy to see for the user while reducing the intensity of the light source unit predicted to have the shortest remaining life.

### Embodiment 2

In Embodiment 1, the intensity of the light output by the light source unit predicted to have the shortest remaining life is restricted while a setup image is being projected, and the intensity of the light output by the light source unit predicted to have the shortest remaining life is not restricted while an informative image is being projected. However, In Embodiment 2, the intensity of the light output by the light source unit predicted to have the shortest remaining life is restricted even while an informative image is being projected.

The configuration of the HUD device according to Embodiment 2 is the same as the configuration of the HUD device according to Embodiment 1. As such, a detailed description thereof will not be repeated. Hereinafter, the points different from Embodiment 1 will be discussed.

The control unit 122 illustrated in FIG. 4 reduces the intensity of the light output by the light source unit predicted to have the shortest remaining life to below an intensity that results in the original color tone of the informative image, when the informative image indicating the route information 61 and/or the distance information 62 illustrated in FIG. 2 is displayed. For example, assume the light source unit predicted to have the shortest remaining life is the laser light source 105 which outputs red laser light, and the original color tone (R:G:B ratio) of the image of the route information 61 is 6:4:3. In this case, the control unit 122 controls the intensity of the laser light output from the laser light sources 103 through 105 to achieve a color tone of 5:4:3 for the image of the route information 61 by decreasing the red proportion by one. With this, the informative image that is projected on the combiner 60 appears slightly more blue than normal.

It should be noted that it is possible for the user to set whether a change in color tone of the informative image is allowed or not. In other words, the user makes an input to the input unit 102 to allow or prohibit changes in the color tone of the informative image. The control unit 122 changes the color tone when the informative image is displayed only when an input allowing so has been made.

It should be noted that the control unit 122 may change the color tone of the informative image while the automobile 50 is stopped regardless of the color tone change permission setting set by the user. It should also be noted that the control unit 122 may determine that the automobile 50 is stopped when the speed output of the speedometer is zero or below a predetermined speed.

As is described above, with Embodiment 2, as long as the user allows for the color tone to be changed, it is possible to restrict the intensity of the light output from the light source unit predicted to have the shortest remaining life even when an informative image is being projected. As such, the operating life expectancy of the projector device can be efficiently increased.

Moreover, while the automobile is in motion, it is necessary to make the informative images easy to see since the user is concentrating on driving. However, when the automobile is stopped, there is no problem in making the informative image slightly more difficult to see since the user is not mentally occupied with driving. As such, the operating life expectancy of the projector device can be efficiently increased while maintaining a safe environment while driving the automobile by restricting the intensity of the light output by the light source unit predicted to have the shortest remaining life while the automobile is stopped.

Hereinbefore the HUD device according to the embodiments of the present invention has been described, but the present invention is not limited to these embodiments.

For example, in the above embodiments, the intensity of the light source unit predicted to have the shortest remaining life is restricted, but the prediction unit 121 may predict which light source unit has the longest remaining life, and the control unit 122 may increase the intensity of the light output by the light source unit predicted to have the longest remaining life to above a predetermined normal intensity while the setup image is being projected. Here, the predetermined normal intensity is, for example, an intensity determined by the color tone and brightness shown in the table in FIG. 7. With this, the light source unit predicted to have the longest remaining life is preferentially used. The light source unit predicted to have the shortest remaining life, not the light source unit predicted to have the longest remaining life affects the operating life of the projector device. As such, by preferentially using the light source unit predicted to have the longest remaining life, it is possible to efficiently increase the operating life expectancy of the projector device while maintaining a balanced life expectancy for a plurality of light source units.

Additionally, the restricting of the intensity of the light source unit predicted to have the shortest remaining life is not limited to when a setup image is being projected. For example, the intensity of the light source unit predicted to have the shortest remaining life may be restricted while a maintenance image for performing maintenance on the projector device 10 is being projected.

Moreover, the main CPU 101, the image processing unit 111, the light source control unit 112, and the mirror control unit 114 in the above described projector device 10 may more specifically be a computer system configured from a microprocessor, a ROM, a RAM, a hard disk drive, a display unit, and a keyboard, for example. A computer program is stored in the RAM or the hard disk drive. These processing units achieve their functions as a result of the microprocessor operating according to a computer program. Here, the computer program is configured of a plurality of pieced together instruction codes indicating a command to the computer in order to achieve a given function.

A portion or all of the components of each of the preceding processing units may be configured from one system large scale integration (LSI). A system LSI is a super-multifunction LSI manufactured with a plurality of components integrated on a single chip, and specifically is a computer system configured of a microprocessor, ROM, and RAM, for example. The computer program is stored in the RAM. The system LSI achieves its function as a result of the microprocessor operating according to the computer program.

A portion or all of the components of each of the preceding processing units may each be configured from a detachable IC card that is removable from the projector device 10 or a stand-alone module. The IC card and the module are computer systems configured from a microprocessor, ROM, and RAM, for example. The IC card and the module may include the super-multifunction LSI described above. The IC card and the module achieve their function as a result of the microprocessor operating according to the computer program. The IC card and the module may be tamperproof.

The present invention may also be realized as the methods shown above. Moreover, the present invention may also be a computer program realizing these methods with a computer, or a digital signal of the computer program.

Moreover, the present invention may also be realized as the computer program or the digital signal stored on a non-transitory computer-readable storage recording medium, such as a flexible disk, hard disk, CD-ROM, MO, DVD, DVD-ROM, DVD-RAM, Blu-ray Disc (BD), or a semiconductor memory. The present invention may also be the digital signal stored on the above mentioned non-transitory storage recording medium.

Moreover, the present invention may also be realized by transmitting the computer program or the digital signal, for example, via an electric communication line, a wireless or wired line, a network such as the Internet, or data broadcasting.

Moreover, the present invention may be a computer system including memory storing the computer program and a microprocessor operating according to the computer program.

Moreover, the computer program or the digital signal may be implemented by an independent computer system by being stored on the non-transitory storage recording medium and transmitted, or sent via the network, for example.

Furthermore, the preceding embodiments and the preceding variation examples may be individually combined.

Although the present invention has been described and illustrated in detail, it is clearly understood that the same is by way of example only and is not to be taken by way of limitation, the scope of the present invention being limited only by the terms of the appended claims.

### Industrial Applicability

The present invention is applicable, as a projector device, to head-up display devices installed in automobiles, for example.

### Reference Signs List

1 HUD device
10 projector device
20 windshield
60 combiner
61 route information
62 distance information
101 main CPU
101a program
102 input unit
103 through 105 laser light source
106, 107 beam splitter
108 lens
109 MEMS mirror
110 display control unit
111 image processing unit
112 light source control unit
113 LD driver
114 mirror control unit
115 mirror driver
121 prediction unit
122 control unit
123 color tone display unit
201, 204 bar
202, 205 OK button
203, 206 button

## Claims

1. A projector device comprising:
a plurality of light source units each configured to output light of a different color component;
a control unit configured to control an intensity of the light output by each of the light source units;
a projection unit configured to project an image on a projection screen by guiding the light output by each of the light source units to the projection screen; and
a prediction unit configured to predict which light source unit among the light source units has a shortest remaining life,
wherein the control unit is configured to reduce the intensity of the light output by the light source unit predicted to have the shortest remaining life to below a predetermined normal intensity.

2. The projector device according to Claim 1,
wherein the control unit is configured to reduce the intensity of the light output by the light source unit predicted to have the shortest remaining life to zero.

3. The projector device according to Claim 1 or 2,
wherein the control unit is configured to, while the projection unit is projecting a setup image for configuring the projector device on the projection screen, reduce the intensity of the light output by the light source unit predicted to have the shortest remaining life to below the intensity of the light output by other ones of the light source units.

4. The projector device according to Claim 3, further comprising:
a color tone display unit configured to present to a user a plurality of color tones at each of which the light source unit predicted to have the shortest remaining life outputs light of less intensity than the light output by the other ones of the light source units, and prompt the user to select one of the color tones; and
a storage unit configured to store the color tone selected by the user,
wherein the control unit is configured to, while the projection unit is projecting the setup image on the projection screen, control the intensity of the light output by each of the light source units to achieve the color tone stored in the storage unit.

5. The projector device according to any one of Claims 1 to 4, further comprising
an input unit configured to receive a user input for allowing a change in color tone of an informative image to be projected on the projection screen,
wherein when the input unit receives the user input for allowing a change in color tone of the informative image, the control unit is configured to, while the projection unit is projecting the informative image on the projection screen, reduce the intensity of the light output by the light source unit predicted to have the shortest remaining life to below an intensity resulting in an original color tone of the informative image.

6. The projector device according to any one of Claims 1 to 4, wherein the projector device is installed in a vehicle, and the control unit is configured to, while the vehicle is stopped and the projection unit is projecting an informative image that provides assistance in driving the vehicle, reduce the intensity of the light output by the light source unit predicted to have the shortest remaining life to below an intensity resulting in an original color tone of the informative image.

7. The projector device according to Claim 3 or 4,
wherein the prediction unit is further configured to predict which light source unit among the light source units has a longest remaining life, and
the control unit is configured to, while the projection unit is projecting the setup image on the projection screen, increase the intensity of the light output by the light source unit predicted to have the longest remaining life to above the predetermined normal intensity.

8. A head-up display device comprising:
the projector device according to any one of Claims 1 to 7; and
a transparent display plate onto which the image is projected.

9. A projector device control method comprising:
predicting, among a plurality of light source units that each output light of a different color component, which light source unit has a shortest remaining life; and
reducing the intensity of the light output by the light source unit predicted to have the shortest remaining life to below a predetermined normal intensity.
